# EUROPEAN PATENT SPECIFICATION

(11) **EP 0 285 335 B1**
(45) Date of publication and mention of the grant of the patent: **18.05.1994**
(21) Application number: 88302646.0
(22) Date of filing: 25.03.1988
(51) Int. Cl.: G06F 13/38, G06F 13/28, G06F 5/06

(54) **Data communication system and method**
Datenübertragungssystem und - verfahren
Système et méthode de transmission de données

(30) Priority: 01.04.1987 GB 8707778
(43) Date of publication of application: 05.10.1988
(73) Proprietor: DIGITAL EQUIPMENT INTERNATIONAL LIMITED, CH-1700 Fribourg (CH)
(72) Inventor: Bryant, Stewart F., Redhill Surrey (GB); Harwood, Michael J., Reading RG2 7TF (GB)
(74) Representative: Goodman, Christopher

(56) References cited:
- EP-A- 0 031 031
- US-A- 4 649 384
- ELECTRONIC DESIGN, vol. 29, November 1981, no. 24, Waseca, MN, US, pages 205-212+214; A. WEISSBERGER: "FIFOS eliminate the delay when data rates differ"

## Description

The present invention relates to data communication systems and more particularly to systems wherein data is received at an input port of a processor for subsequent use by the processor.

A problem which arises with such systems is that if the processor is busy on other tasks it may not be possible for it to perform the system operations necessary for data to be transferred from the datA receiving device hereinafter referred to as a serial communications controller, to the data buffer memory, either directly or with the assistance of a direct memory access circuit (DMA). If the incoming data is being sent at high speed and the processor is fully occupied then received information may simply be lost and the data will then have to be retransmitted causing delay and inefficient operation of the system.

It is an object of the present invention to provide a data communication system in which incoming data is extremely unlikely to be lost due to occupancy of a processor on other tasks.

The article Electronic Design, Vol.29, November 1981, No. 24, Waseca, MN, US, pages 205-212+214: A Weissberger shows a FIFO situated between a slow CPU and a high performance receiver/transmitter for optimising data transfers between the relatively slow CPU to the high speed, bipolar serial receiver/transmitter.

EP-A-0031031 shows a serial storage interface apparatus for coupling a serial storage mechanism, such as a charge coupled storage device or a magnetic bubble storage device, to a data processor input/output (I/O) bus. The date transfer circuitry includes an I/O controller and a First-in-First-Out (FIFO) buffer storage mechanism. Speed control circuitry is provided for causing the serial storage mechanism to operate at a high speed when the data processor is responding more rapidly to data transfer requests from the interface apparatus and at a lower speed when the data processor is responding less rapidly to data transfer requests from the interface apparatus. This speed adjustment feature reduces the amount of data buffering required for interfacing a serial storage mechanism to an asynchronous variable response time I/O bus system.

According to the present invention there is provided a data communication system as claimed in claim 1.

The present invention also provides a method of operating a data communications interface as claimed in claim 11.

Embodiments of the present invention will now be described with reference to the accompanying drawings in which :-
Figure 1 shows a block diagrammatic form of a known data communication system including a processor which receives and transmits data from and to a data communication highway;
Figure 2 shows block diagrammatically the data communication system of Figure 1 modified in accordance with the present invention;
Figure 3 shows block diagrammatically in greater detail control means for the system of Figure 2;
Figure 4 shows block diagrammatically an alternative control means for specific data protocol systems;
Figure 5 shows two data protocol systems for receipt by the embodiment of Figure 4; and
Figure 6 shows block diagrammatically an alternative data communication system modified in accordance with the present invention.

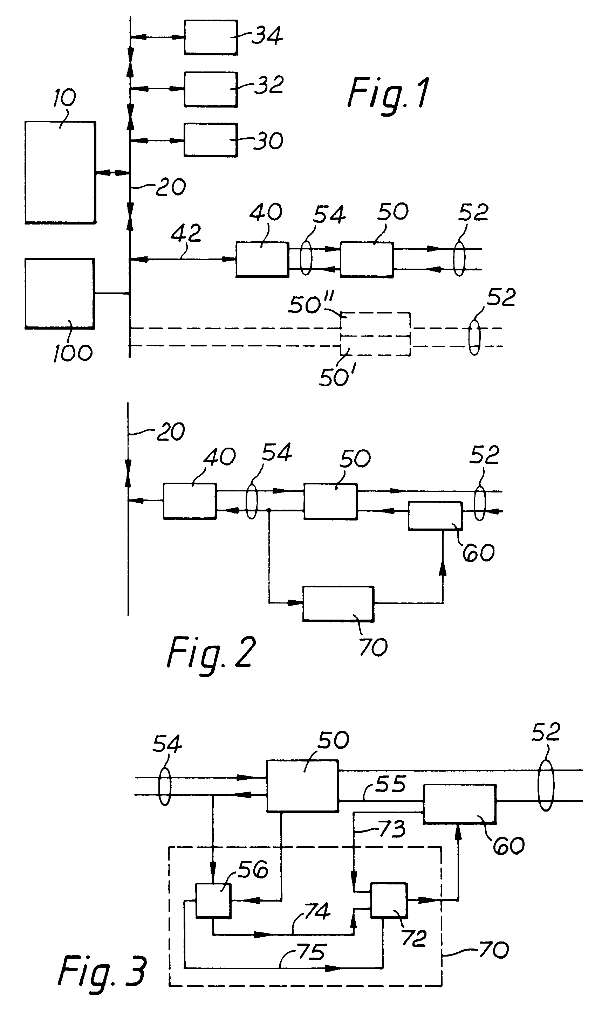

With reference now to Figure 1, a typical data communication system includes a processor 10 connected via a highway 20 to various units 30, 32, 34 and to a direct memory access circuit DMA 40 via a further highway 42. The DMA 40 is able to transmit and receive status and control information to and from the processor 10 and to pass incoming data to a memory 100 for possible future processing. A serial communications controller 50 is typically connected to buffer data received from a duplex data link 52 and is connected to DMA 40 via a simplex link 54.

In alternative known arrangements shown in dotted lines the DMA 40 may be omitted. The serial communications controller 50 may be as shown in solid lines or may be split into separate receiver and transmitter sections 50ʹ, 50ʹʹ as shown in dotted lines. The transmitter section may be omitted completely since the present invention is concerned only with the receipt of data.

The alternative described systems of Figure 1 are all able to function satisfactorily provided that data incoming in link 52 can be fed to the memory 100 at a rate equal to or greater than the rate at which it is received. If for any reason this cannot be accomplished then a part of the data received by serial controller 50 (or 50ʹ) will be lost. For the system shown in solid lines, which will be used hereinafter as an example this can occur when two received messages abut on the serial highway. There is a peak in the processor workload at the completion of a message, where it must ascertain the correctness of the newly completed message, and then re-configure the system for the receipt of the next message.

It may be that the processor is busy with another task when this event occurs, or it could be that the amount of time between the adjacent messages is too small for the processor to perform the necessary work. In the limit there may actually be a time period of less than 1 data element. DMA 40 may then not be able to gain access to the memory 100 and may not be able to clear data coming through the serial controller 50. Serial controller 50 will therefore "dump" the data which will be lost. The memory 100 will then either receive none of the data or only a portion and the processor 10 must detect this and indicate a fault probably requiring re-transmission of the lost data, or a possible inadvertent reception of corrupt data will take place.

With reference now to Figure 2 to alleviate this problem according to the present invention line data input storage means 60 is provided between the receiver section of the controller 50 and the link 52. The storage means is controlled by a controller 70 which receives signals derived from the DMA's condition to pass data from the serial controller 50. The storage means 60 therefore acts as a buffer store to retain received data and to pass it to serial controller 50 only when it can be processed by DMA 40. (In the alternative embodiment shown in dotted lines in Figure 1 the control signals will be derived directly from the processor 10 and the data passed directly from the receiver section of controller 50 into the memory 10 or into a register with the processor).

The principle of operation of the invention will now be described in general with reference to Figure 3 in which the storage means 60 is a FIFO store. Data received on link 52 is stored in FIFO 60 at the data rate of the link for example 2 M bits per second and may be fed into the input 55 of controller 50 at a higher data rate - for example 4 M bits per second under the control of controller 70.

Controller 70 includes the component parts shown within the dotted line and include a 4 M bit clock generator 72 which is connected to clock data out of FIFO 60 into the controller 50 when it is actuated. The general operation is that clock generator 72 is normally running but may be de-energised by either a signal on line 73 indicating that FIFO 60 is empty or by a signal on line 74 from a unit 56 monitoring the controller to DMA link 54 indicating that the DMA is unable to receive and process any further data at that time. A clock start signal may be given by unit 56 on line 75 when an acceptable condition is present on the link 54. This restarts clock generator 72 if any data is still left in FIFO store 60. Thus incoming data may be stored in FIFO store 60 at the data rate of link 52 and if DMA 40 is unable to process the data it will steadily fill up the store. The capacity of store 60 may be varied to suit the anticipated delay time during which DMA 40 may be unable to accept data for transfer to processor 10. The store 60 may, for example, be 64 bits long or 16 K bits or if a controlled Random Access Memory (RAM) is used it can be several M bits long.

Once DMA is able to access memory 100 (see Figure 1) then clock generator 72 may be energised and data will be fed into controller 50 for subsequent transfer, on demand, to DMA 40 and then to memory 100.

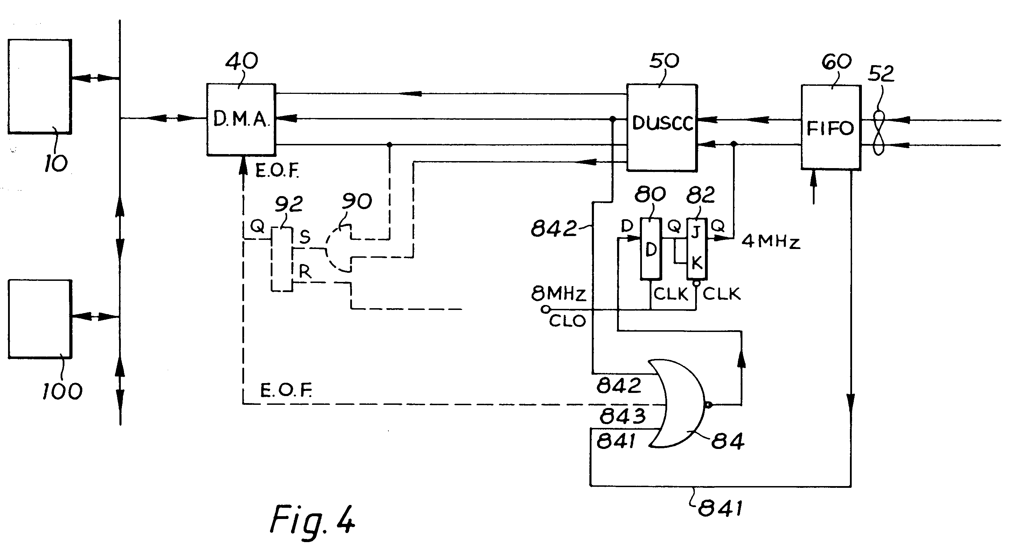

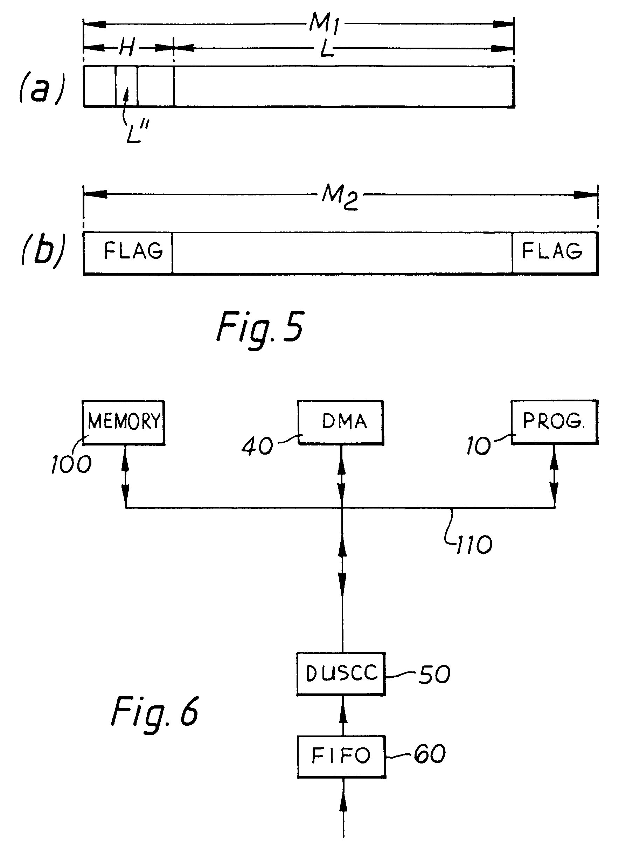

With reference now to Figure 4, specific embodiments are shown related to bit oriented protocol data transmission and character oriented protocol transmissions. The message format of these protocols is illustrated diagrammatically in Figure 5.

Figure 5a shows a character oriented protocol for example DDCMP (Digital Data Communications Message Protocol) in which the length of each message can be determined by decoding the header of the message. The header is of fixed length, and contains fields that are decoded to determine the presence of a length field within the header, which in turn is decoded to determine the message size. This is illustrated by the section L in the message of length Ml. Thus "L" can be decoded to determine the length of any message and is normally part of a header section H.

Figure 5b shows a bit oriented protocol (e.g. HDLC) in which the message M2 is preceded by a FLAG section comprising a predetermined sequence of bits (e.g. 01111110) and is terminated by the same FLAG sequence. (There are byte oriented protocols of this general type such as bisync). The system therefore does not know the length of any message at the start of the message but must wait until the second FLAG sequence is received to recognise the end of message M2.

These two types of protocol are dealt with in a practical system as shown in Figure 4 by including the circuitry shown in dotted outline for bit oriented protocol data transmission as now described.

The data is received at the input of FIFO 60 and is stored therein at a rate determined by the line clock CL2. The output of data from FIFO 60 is controlled by the clock CL1. For the invention to work clock rate CL1 must be greater than clock rate CL2 and in a practical embodiment a ratio of two to one or greater is preferable.

Clock CL1 is generated by two flip flops 80, 82 of D type and JK type respectively and when running clock CL1 controls both the FIFO 60 and the serial communications controller 50. The effect of the two flip flops is to divide an input lock CLO by two to produce an output clock CL1. The D type flip flop 80 is used to synchronise the clock control signal from 84, its action is to prevent the signal on J & K of flip-flip 82 from changing on the 8MHZ clock edge on which it toggles, thus reducing the metastable susceptability of the system. The JK flip flops 82 is controlled by the D type flip flop 80. The clock ceases to run on receipt of a signal from a NOR gate 84 which changes over the state of D type flip flop 80. Thus clock CL1 is normally running and ceases only when either there is no further data in the FIFO store 60 or when the DUSSC or the DMA cannot handle any further data at that time. If no DMA is present then the clock CL1 will be stopped on instruction direct from the processor.

The detailed operation of the system will now be described. In order to be able to refer to specifically generated control signals a particular type of serial communications controller and DMA are referred to by way of example only. Other types will generate similar control signals which maybe used to control the flow of data through FIFO 60. If no DMA is used then the signals may be generated by the processor 10.

The serial communications controller may be of the SIGNETICS 68562 DUSCC type and data and control signals are of a type used to control a DMA of the SIGNETICS 68430 type. The signals shown are as follows.
- Rx DMA Request: This line is asserted to indicate that a receiver in the DUSCC requires service.
- DMA END of frame: Typically used to prematurely terminate a DMA block transfer. This signal also causes the DMA to correctly processs any buffered transactions that have occurred prior to the signal.
- DMA acknowledge: This is a specific signal indicating to the requesting device that the DMA transaction has been accepted for processing and that the device may transfer the information present at its output.
- DONE: A signal indicating that the DUSCC has detected that the current character being transferred is the last character of a frame.

The operation of the circuit is as follows:-
Assume the conditions that there is no RX DMA REQUEST and that there is a data in FIFO 60 which is required to be processed by processor 10 or stored in memory 100. (For the present assume the EOF signal is not present its effect will be explained later).

In this instance NOR gate 84 has only 2 signals, FIFO O/P register empty, which from the above assumptions will be false, resulting in 841 being deasserted; and Rx DMA request on line 842 which is also false since there is no DMA request yet. The O/P NOR gate (clock enable) 84 is thus asserted (high). This signal is latched by D type flip flop 80 on the next low to high transition of CLO.

The action of the JK flip flop is controlled by the Q output of the D type flip flop. If the output of NOR gate 84 was true on the previous positive clock edge of the CLO clock cycle then Q of D type flip flop 80 will be set, and thus J and K of flip flop 82 will be set thus the Q output of JK flip flop 82 will toggle on the next high to low clock edge. In this way clock CL1 is generated at a frequency of half that of CLO. This causes JK flip flop 82 to function as a divide by two circuit for clock CLO and produce clock CL1 which is a clock for clocking data out of FIFO 60 and also for clocking data into DUSCC 50. When the O/P of NOR gate 84 is false on the previous active clock edge of the CLO clock cycle J and K are clear, causing the Q output of JK flip flop 82 to remain in its previous state at each clock tick.

If all data is subsequently clocked out of FIFO 60 then FIFO 60 will then assert O/P register empty signal on line 841 and the output of NOR gate 84 (clock enable) will be de-asserted thereby de-asserting the D input to D type flip flop 80, and on the next 8 MHz active clock edge deasserting the J & K inputs to JK flip flop 82. Thus clock CL1 will effectively stop before the next 4 MHz clock tick thereby providing an effective "instantaneous" stop for clock CL1.

If serial data is again clocked into FIFO 60 from line 52 by the line clock CL2 then the FIFO O/P register empty signal will be de-asserted indicating data in FIFO 60 and clock CL1 will recommence.

When a complete character is present in the DUSCC 50 then Rx DMA REQUEST becomes true and the input(842) is asserted. This de-asserts the output of NOR gate 84 and stops clock CL1 (as described above). Thus data flow from the FIFO 60 to DUSCC 50 stops.

If it is configured to transfer data then at some later time the DMA responds to DMA Request by asserting DMA ACKNOWLEDGE which serves to clock data out of the DUSCC 50 into the DMA for subsequent storage in memory 100.

As this byte of data is clocked out of the DUSCC the Rx DMA REQUEST becomes false and input 842 of NOR gate 84 becomes false allowing clock CL1 to recommence to clock further data (if present) from FIFO 60 to DUSCC 50.

In the system does not have a DMA then the processor 10 will control the flow of information directly. Thus the processor may provide an equivalent "DMA ACKNOWLEDGE" signal to the DUSCC to clock information from the DUSCC directly into the processor 10 or memory 100. This signal may be derived by interpreting a read from a suitable memory location as a RX DMA ACKNOWLEDGE.

For character oriented (e.g. DDCMP type) operation the above process will be continued byte by byte until the DMA determines that is has transferred a complete buffer (i.e. a defined series of storage locations of predetermined length) from the DUSCC to the memory. There will be no more DMA ACKNOWLEDGE signals produced until the processor 10 reprograms the DMA. During this period (which may be very short if the processor is otherwise idle or long if the processor is very busy) data continues to flow into FIFO 60. One byte of such data is transferred into DUSCC 50 and a Rx DMA REQUEST signal is output. This signal will stop clock CL1 and since the DMA is not ready it will not generate Rx DMA ACKNOWLEDGE so that the clock CL1 will remain stopped. Thus data will accumulate in FIFO 60.

In bit oriented protocols such as HDLC the termination comes only from within the message itself. In this case the DUSCC provides a DONE signal to inform the DMA that it has reached the completion of a message. Under these circumstances the DMA has a buffer which is longer than (or equal to) the maximum message size or a series of buffers that may be consecutively filled, until the end of message is reached as indicated by the assertion of the EOF signal.

In this mode of operation the system works as described above transferring data from DUSCC 50 to DMA 40 until DUSCC 50 determines the end of a message and asserts DONE. Flip flop 92 is of the RS type and the output of AND gate 90 is connected to the set input. When DONE and DMA ACKNOWLEDGE are both asserted then the output of AND gate 90 also becomes asserted, and this sets the output of flip flop 92 true and asserts EOF to DMA 40. DMA 40 then flushes any bytes held internally from DUSCC 50 and informs the processor 10 that this particular DMA transaction is complete. The processor 10 is then able to determine the size of the message from the registers within the DMA containing the message.

The EOF signal asserted by flip flop 90 provides an input on line 843 to NOR gate 84 and this sets D type flip flop input to false thereby stopping clock CL1.

The reason that the DONE signal must be ANDed with DMA ACKNOWLEDGE is because the DUSCC is a 2 channel device, with only a single DONE O/P. Thus Rx DMA ACKNOWLEDGE and DONE act to decode the DONE into a DONE - Rx chan Ø and DONE - Rx chan l signal pair.

DMA ACKNOWLEDGE is set false at the end of each DMA transfer, and since DONE is only true during the DMA transfer cycle this S input to RS flip flop 90 only acts momentarily.

The output of RS flip flip 90 thus remains asserted until EOF ACKNOWLEDGE from the processor is asserted.

In a subsequent operation the processor is required to reconfigure DMA 40 to "DMA" a new message from DUSCC 50 into for example a selected memory location in memory 100. The processor asserts EOF ACKNOWLEDGE (which is also a pulse) to the reset input R of flip flop 92 thus causing the Q output of 92 to be reset thereby removing the effect of EOF from the DMA and setting the input (on line 843) to NOR gate 84 to false thereby allowing clock CL1 to be restarted to transfer further data (if present) from FIFO 60 to DUSCC 50.

In a system where there is no DMA 40, provision is made for the processor 10 to have access to the output of flip flop 92 by a suitable input/output technique so that the processor 10 is able to pole the output to see when a frame is complete.

The DUSCC 50 will, when set up to receive, remove any FLAG or SYNC signals automatically. The reception of FLAG or SYNC signals will not ascert DMA REQUEST, this not being asserted until after receipt of the first non FLAG or SYNC character.

The reset signal to FIFO 50 may be asserted at the commencement of a receive operation to clear FIFO 60 of all data. Alternatively the data present in FIFO 60 may be fed to DUSCC 50 which will "dump" the initial data - which may be garbled - until it receives genuine FLAG or SYNC signals on which it will act.

The processor 10 will require access to the DUSCC 50 at the end of each frame to determine status information such as for example CRC (cyclic redundancy check sum) error. This may be obtained either through the DMA 40 or direct (via a link not shown) from the DUSCC.

The provision of FIFO 60 in the position shown to receive data is the preferred embodiment. It may however be possible to provide the FIFO 60 in a position between DUSCC 50 and DMA 40. As explained hereinafter this presents severe problems however for any sophisticated system and is not therefore preferred.

Most types of serial communications controller accummulate status information which is obtained from the incoming data. If the FIFO 60 is placed after the serial communications controller 50 then such status information obtained from the incoming data must be stored separately and thus FIFO 60 would have to be larger and its interfaces more complex. In its simplest form it would require to store data and status information separately but in a parallel form allowing the processor 10 access to both either via the DMA or directly.

Also in character oriented mode the DUSCC 50 accummulates CRC (cyclic redundancy check) errors and at any stage prior to a CRC being considered good the DUSCC reports it as bad by ORing this with the accummulated CRC error. Thus to identify a correct message this status bit must be cleared by the processor just prior to the last byte of a message perculating to the top of the DUSCC internal Rx FIFO. If the external FIFO is on the output of DUSCC 50 then this operation will not be possible. Thus extension of the FIFO by incorporation of a parallel external FIFO is not possible in this case.

Thus the preferred position for FIFO 60 is on the incoming side of DUSCC 50.

It should be noted that FIFO 60 operates on incoming data only. Transmitted data can be fed through DUSCC 50 or can be fed through a separate transmitter circuit or can be completely absent in a receive only situation for example for line monitoring operation.

With reference now to Figure 6 the processor 10 DMA 40 and memory 100 may, as shown be connected by a common bus 110 which is also connected as shown to the DUSCC 50. The system can operate as for the system of Figure 4 except that the DUSCC 50 can have direct access to the memory 100 or the processor 10. When the DMA 40 and processor 10 are occupied the FIFO 60 is used to store incoming data which is processed by DUSCC 50 as required and as explained hereinbefore with reference to Figure 4.

The embodiments of Figures 4 and 6 may be readily modified to process messages wherein the DMA 40 can readily keep up except at the end of frames. In such a case the clock CL1 need only be stopped at the End of Frame (EOF) signal since the DUSCC and DMA can keep up at all other times. In this case the clock CL1 can be restarted by a signal from the DMA indicating that it has completed its "End of Frame" processing of the data and is ready to commence to receive a further message, clock CL1 being again stopped by the end of frame signal at end of the further messages etc. etc.

## Claims

1. A data communications system including a data communications interface for allowing data access between a processor (10) and a synchronous communication link (52), the processor including a processor bus (20), the interface being connected to receive input data from the link (52) at a rate specified by a synchronous link clock signal (CL2) provided by the link, the interface comprising:
a serial communications controller (50) interposed between the processor bus (20) and the link (52), the serial communications controller (50) providing controller data and a request signal, the request signal being asserted when the serial communications controller is requesting the processor to read the controller data;
storage means (60), interposed between the serial communications controller (50) and the link (52), for receiving and storing the input data from the link (52) at a first data rate specified by the synchronous link clock signal (CL2), and for transmitting the input data to the serial communications controller (50) at a second data rate specified by an output clock signal (CL1) and the second data rate being higher than the first data rate, and the storage means (60) being a first in first out (FIFO) storage device; and
control means (70) for receiving the request signal and for providing the output clock signal (CL1), the output clock signal being disabled when the request signal is asserted, the control means thereby controlling the flow of data from the storage means into the serial communications controller.

2. A data communication system as claimed in claim 1, characterised in that the serial communications controller (50) is of the Dual Universal Communications Controller (DUSCC) type.

3. A data communications system as claimed in claim 1 or claim 2, in which the serial communications controller (50) is a two channel device with receive and transmit channels.

4. A data communication system as claimed in any one of claims 1 to 3, characterised in that a Direct Memory Access (DMA) circuit (40) is interposed between the serial communications controller (50) and the processor (10) to control the operation of the serial communications controller, the DMA being controlled in turn by the processor.

5. A data communication system as claimed in any one of claims 1 to 3, characterised in that the processor (10) is used directly to control the serial communications controller (50) and thereby the transfer of data into a memory (100).

6. A data communication system as claimed in claim 4, characterised in that the control means (70) is provided for the FIFO storage device (60) which control means is operative to control the output of information from the FIFO storage device to the DMA dependent on the operative condition of the DMA.

7. A data communication system as claimed in claim 6 characterised in that the control means (70) for the FIFO storage device (60) comprises a clock generator (72) which is energised to clock data out of the FIFO storage device into the serial communications controller (50), the clock generator being controlled by signals from the DMA (40), the serial communications controller (50) and the FIFO storage device (60).

8. A data communication system as claimed in claim 7, characterised in that the control means (70) includes means (84) for controlling the clock generator to be energised only when input data is present in the FIFO storage device (60).

9. A data communication system as claimed in claim 7, characterised in that the control means (70) includes means (84) for controlling the clock generator to be energised only when the serial communications controller is able to receive data from the FIFO storage device.

10. A data communication system as claimed in claim 7, characterised in that the control means (70) includes means (84) for controlling the clock generator to be energised only when the DMA is able to receive data from the serial communications controller.

11. A method of operating a data communications interface to forward data received from a synchronous data communication link (52) to a data processor (10), the data to be input to a data processor via a communications controller, the data communications interface including a first-in first-out (FIFO) data storage device (60), a communications controller (50), and a control means (70), the communications controller asserting a request signal when it is requesting the processor to read the controller data, the method comprising the steps of:
storing data from the link (52) in the FIFO data storage device (60) at a first clock rate (CL2) corresponding to a data communication link clock rate specified by the link, before the data is passed to the communications controller (50);
reading the data out of the FIFO data storage device (60), and, in turn, reading data into the communications controller, at a second clock rate (CL1) which is higher than the first clock rate, said reading of data out of the FIFO data storage device being disabled when the request signal is asserted; and reading data out of the communications controller (50) into the processor (10) after synchronously reading the data out of the FIFO data storage device.

12. A method of processing data as claimed in claim 11 in which the processing of the data comprises storing the data in a second data storage device (100).

13. A method of processing data as claimed in claim 11 or claim 12 in which the second clock rate is approximately twice the first clock rate.

14. A method of processing data as claimed in any one of claims 11 to 13 in which the second clock is controllable to be stopped when the data is not able to be processed or when there is no data for processing.

## Patentansprüche

1. Datenübertragungssystem mit einer Datenübertragungsschnittstelle, um Datenzugriff zwischen einem Prozessor (10) und einer synchronen Übertragungsleitung (52) zu ermöglichen, wobei der Prozessor einen Prozessorbus (20) umfaßt, die Schnittstelle so verbunden ist, Eingangsdaten von der Leitung (52) mit einer Rate zu empfangen, die durch einen synchronen Verbindungsleitungs-Taktimpuls (CL2) spezifiziert ist, der von der Verbindungsleitung ausgegeben wird, wobei die Schnittstelle folgendes umfaßt: eine serielle Übertragungssteuerung (50), die zwischen dem Prozessorbus (20) und der Verbindungsleitung (52) liegt, wobei die serielle Übertragungssteuerung (50) Steuerdaten und ein Anforderungssignal liefert, wobei das Anforderungssignal dann aktiviert wird, wenn die serielle Übertragungssteuerung den Prozessor auffordert, die Steuerungsdaten zu lesen;
eine Speichereinrichtung (60), die zwischen der seriellen Übertragungssteuerung (50) und der Verbindungsleitung (52) liegt, zum Empfang und Speichern der Eingangsdaten von der Verbindungsleitung (52) mit einer ersten Datenübertragungsrate, die durch den synchronen Verbindungsleitungs-Taktimpuls (CL2) spezifiziert ist, und zur Übertragung der Eingangsdaten an die serielle Übertragungssteuerung (50) mit einer zweiten Datenübertragungsrate, die durch einen Ausgangs-Taktimpuls (CL1) spezifiziert ist, wobei die zweite Datenübertragungsrate höher ist als die erste Datenübertragungsrate, und die Speichereinrichtung (60) eine Speichervorrichtung nach der first-in/first-out-Prioritätsmethode (FIFO) ist; und
eine Steuereinrichtung (70) zum Empfangen des Anforderungssignals und zum Liefern des Ausgangs-Taktimpulses (CL1), wobei der Ausgangs-Taktimpuls dann deaktiviert wird, wenn das Anforderungssignal aktiviert wird, wodurch die Steuereinrichtung den Datenfluß von der Speichereinrichtung zur seriellen Übertragungssteuerung steuert.

2. Datenübertragungssystem nach Anspruch 1, dadurch gekennzeichnet, daß die serielle Übertragungssteuerung (50) vom Typ Dual Universal Communications Controller (DUSCC) ist.

3. Datenübertragungssystem nach Anspruch 1 oder 2, in dem die serielle Übertragungssteuerung (50) eine Zweikanalvorrichtung mit Empfangs- und Sendekanälen ist.

4. Datenübertragungssystem nach einem der Ansprüche 1 bis 3, dadurch gekennzeichnet, daß eine Schaltung (40) mit direktem Speicherzugriff (DMA) zwischen die serielle Übertragungssteuerung (50) und den Prozessor (10) geschaltet ist, um die Arbeitsweise der seriellen Übertragungssteuerung zu steuern, wobei die DMA wiederum von dem Prozessor gesteuert wird.

5. Datenübertragungssystem nach einem der Ansprüche 1 bis 3, dadurch gekennzeichnet, daß der Prozessor (10) dazu benutzt wird, die serielle Übertragungssteuerung (50) und damit die Übertragung von Daten in einen Speicher (100) direkt zu steuern.

6. Datenübertragungssystem nach Anspruch 4, dadurch gekennzeichnet, daß die Steuereinrichtung (70) für die FIFO-Speichervorrichtung (60) vorgesehen ist, wobei die Steuereinrichtung die Steuerung der Ausgabe von Informationen von der FIFO-Speichervorrichtung an die DMA bewirkt, abhängig vom Betriebszustand der DMA.

7. Datenübertragungssystem nach Anspruch 6, dadurch gekennzeichnet, daß die Steuereinrichtung (70) für die FIFO-Speichervorrichtung (60) einen Taktgeber (72) umfaßt, der mit Strom versorgt wird, um Daten aus der FIFO-Speichervorrichtung in die serielle Übertragungssteuerung (50) zu takten, wobei der Taktgeber durch Signale von der DMA (40), von der seriellen Übertragungssteuerung (50) und von der FIFO-Speichervorrichtung (60) gesteuert wird.

8. Datenübertragungssystem nach Anspruch 7, dadurch gekennzeichnet, daß die Steuereinrichtung (70) eine Einrichtung (84) umfaßt, die den Taktgeber so steuert, daß er nur dann erregt wird, wenn Eingangsdaten in der FIFO-Speichervorrichtung (60) vorhanden sind.

9. Datenübertragungssystem nach Anspruch 7, dadurch gekennzeichnet, daß die Steuereinrichtung (70) eine Einrichtung (84) umfaßt, die den Taktgeber so steuert, daß er nur dann erregt wird, wenn die serielle Übertragungssteuerung Daten von der FIFO-Speichervorrichtung empfangen kann.

10. Datenübertragungssystem nach Anspruch 7, dadurch gekennzeichnet, daß die Steuereinrichtung (70) eine Einrichtung (84) umfaßt, die den Taktgeber so steuert, daß er nur dann erregt wird, wenn die DMA Daten von der seriellen Übertragungssteuerung empfangen kann.

11. Verfahren zum Betreiben einer Datenübertragungsschnittstelle, um Daten, die von einer synchronen Datenübermittlungsleitung (52) empfangen wurden, an einen Datenprozessor (10) zu senden, wobei die Daten über eine Übertragungssteuerung in einen Datenprozessor eingegeben werden sollen, die Datenübertragungsschnittstelle eine first-in/first-out-(FIFO)-Datenspeichervorrichtung (60), eine Übertragungssteuerung (50) und eine Steuereinrichtung (70) umfaßt, wobei die Übertragungssteuerung ein Anforderungssignal aktiviert, wenn angefordert wird, daß der Prozessor die Steuerungsdaten lesen soll, wobei das Verfahren folgende Verfahrensschritte umfaßt:
Speicherung von Daten von der Verbindungsleitung (52) in die FIFO-Datenspeichervorrichtung (60) mit einer ersten Taktrate (CL2) entsprechend einer Datenübertragungs-Verbindungsleitungs-Taktrate, die durch die Verbindungsleitung spezifiziert ist, ehe die Daten an die Übertragungssteuerung (50) weitergereicht werden.
Auslesen der Daten aus der FIFO-Datenspeichervorrichtung (60) und, der Reihe nach, Einlesen der Daten in die Übertragungssteuerung, mit einer zweiten Taktrate (CL1), die höher ist als die erste Taktrate, wobei das Lesen der Daten aus der FIFO-Datenspeichervorrichtung dann abgebrochen wird, wenn das Anforderungssignal aktiviert ist; und Auslesen von Daten aus der Übertragungssteuerung (50) in den Prozessor (10) nach dem synchronen Auslesen der Daten aus der FIFO-Datenspeichervorrichtung.

12. Verfahren zur Verarbeitung von Daten nach Anspruch 11, in dem die Verarbeitung von Daten das Speichern von Daten in einer zweiten Datenspeichervorrichtung (100) umfaßt.

13. Verfahren zur Verarbeitung von Daten nach Anspruch 11 oder 12, in dem die zweite Taktrate ungefähr doppelt so groß wie die erste Taktrate ist.

14. Verfahren zur Verarbeitung von Daten nach einem der Ansprüche 11 bis 13, in dem der zweite Takt kontrollierbar gestoppt werden soll, wenn die Daten nicht verarbeitet werden können oder wenn es keine Daten zur Verarbeitung gibt.

## Revendications

1. Système de communication de données comprenant une interface de communication de données pour l'accès de données entre un processeur (10) et une liaison de communication synchrone (52), le processeur comprenant un bus de processeur (20), l'interface étant reliée pour recevoir des données d'entrée en provenance de la liaison (52) suivant un débit spécifié par un signal d'horloge (CL2) de liaison synchrone fourni par la liaison, l'interface comportant:
une contrôleur de communication en série (50) interposé entre le bus de processeur (20) et la liaison (52), le contrôleur de communication en série (50) fournissant des données de contrôleur et un signal de demande, le signal de demande étant activé lorsque le contrôleur de communication en série demande au processeur de lire les données de contrôleur;
des moyens de stockage (60), interposés entre le contrôleur de communication en série (50) et la liaison (52), pour recevoir et emmagasiner les données d'entrée en provenance de la liaison (52) suivant une débit binaire spécifié par le signal d'horloge de liaison synchrone (CL2), et pour transmettre les données d'entrée au contrôleur de communication en série (50) suivant un second débit binaire spécifié par un signal d'horloge de sortie (CL1), le second débit binaire étant supérieur au premier débit binaire, et les moyens de stockage (60) étant constitués par un dispositif de stockage premier entré, premier sorti (FIFO); et
des moyens de commande (70) pour recevoir le signal de demande et pour fournir le signal d'horloge de sortie (CL1), le signal d'horloge de sortie étant désactivé lorsque le signal de demande est activé, les moyens de commande commandant ainsi le flux de données passant des moyens de stockage au contrôleur de communication en série.

2. Système de communication de données selon la revendication 1, caractérisé en ce que le contrôleur est du type Dual Universal communications controller (DUSCC).

3. Système de communication de données selon la revendication 1 ou la revendication 2, dans lequel le contrôleur de communication en série (50) est un dispositif à deux voies ayant des canaux de réception et d'émission.

4. Système de communication de données selon l'une quelconque des revendications 1 à 3, caractérisé en ce qu'un circuit (40) d'accès direct à la mémoire (DMA) est interposé entre le contrôleur de communication en série (50) et le processeur (10) pour commander le fonctionnement du contrôleur de communication en série, le circuit DMA étant commandé, à son tour, par le processeur.

5. Système de communication de données selon l'une quelconque des revendications 1 à 3, caractérisé en ce que le processeur (10) est utilisé directement pour contrôler le contrôleur de communication en série (50) et, par conséquent, le transfert de données dans une mémoire (100).

6. Système de communication de données selon la revendication 4, caractérisé en ce que les moyens de commande (70) sont prévus pour le dispositif de stockage FIFO (60), moyens de commande qui agissent pour commander la délivrance d'informations depuis le dispositif de stockage FIFO jusqu'au circuit DMA en fonction des conditions de fonctionnement du circuit DMA.

7. Système de communication de données selon la revendication 6, caractérisé en ce que les moyens de commande (70) prévus pour le dispositif de stockage FIFO (60) comportent un générateur de signaux d'horloge (72) qui est excité pour faire passer des données du dispositif de stockage FIFO dans le contrôleur de communication en série (50), le générateur de signaux d'horloge étant commandé par des signaux en provenance du circuit DMA (40), du contrôleur de communication en série (50) et du dispositif de stockage FIFO (60).

8. Système de communication de données selon la revendication 7, caractérisé en ce que les moyens de commande (70) comprennent des moyens (84) pour commander le générateur de signaux d'horloge de manière à ce qu'il ne soit excité que lorsque des données d'entrée sont présentes dans le dispositif de stockage FIFO (60).

9. Système de communication de données selon la revendication 7, caractérisé en ce que les moyens de commande (70) comprennent des moyens (84) pour commander le générateur de signaux d'horloge de manière à ce qu'il ne soit excité que lorsque le contrôleur de communication en série est à même de recevoir des données en provenance du dispositif de stockage FIFO.

10. Système de communication de données selon la revendication 7, caractérisé en ce que les moyens de commande (70) comprennent des moyens (84) pour commander le générateur de signaux d'horloge de manière à ce qu'il ne soit excité que lorsque le circuit DMA est à même de recevoir des données du contrôleur de communications en série.

11. Procédé de commande d'une interface de communication de données pour acheminer des données reçues d'une liaison de communication de données synchrones (52) vers un processeur de données (10), les données devant être fournies à un processeur de données par l'intermédiaire d'un contrôleur de communication, l' interface de communication de données comprenant un dispositif de stockage de données (60) premier entré, premier sorti (FIFO), un contrôleur de communication (50) et des moyens de commande (70), le contrôleur de communication activant un signal de demande lorsqu'il demande au processeur de lire les données de contrôleur, le procédé comportant les étapes consistant:
à emmagasiner des données en provenance de la liaison (52) dans le dispositif de stockage de données FIFO (60) suivant une première fréquence d'horloge (CL2) correspondant à une fréquence d'horloge de liaison de communication de données spécifiée par la liaison, avant que les données ne soient transmises au contrôleur de communication (50);
à extraire les données du dispositif de stockage de données FIFO (60) et, à tour de rôle, à introduire des données dans le contrôleur de communication, suivant une seconde fréquence d'horloge (CL1) qui est supérieure à la première fréquence d'horloge, ladite extraction de données du dispositif de stockage de données FIFO étant désactivée lorsque le signal de demande est activé; et à extraire des données du contrôleur de communication (50) et à les introduire dans le processeur (10) après avoir extrait les données de façon synchrone du dispositif de stockage de données FIFO.

12. Procédé de traitement de données selon la revendication 11 dans lequel le traitement des données consiste à emmagasiner les données dans un second dispositif de stockage (100).

13. Procédé de traitement de données selon la revendication 11 ou la revendication 12 dans lequel la seconde fréquence d'horloge est environ deux plus élevée que la première fréquence d'horloge.

14. Procédé de traitement de données selon l'une quelconque des revendications 11 à 13 dans lequel la seconde horloge peut être commandée de manière à s'arrêter lorsque les données ne peuvent être traitées ou lorsqu'il n'y a pas de données à traiter.
